# EUROPEAN PATENT APPLICATION

(11) **EP 2 386 727 A1**
(43) Date of publication of application: **16.11.2011**
(21) Application number: 11165924.9
(22) Date of filing: 12.05.2011
(51) Int. Cl.: F01D 25/10, F02C 6/18

(54) **Turboexpander for power generation systems**

(30) Priority: 14.05.2010 IT CO20100026
(71) Applicant: Nuovo Pignone S.p.A., 50127 Florence (IT)
(72) Inventor: Landi, Giacomo, 50023 Florence (IT); Del Greco, Alberto Scotti, 50023 Florence (IT); Palomba, Sergio, 50023 Florence (IT); Mariotti, Gabriele, 50023 Florence (IT)
(74) Representative: Illingworth-Law, William Illingworth

(57) **Abstract**

A power generation system including: a turboexpander to include an expander section, a pump section and a motor-generator section which are mechanically linked via a shaft. The expander section is fluidly connected to an outlet side of a heat exchanger and configured to receive a vapor stream of a fluid, to rotate the shaft and to generate an expanded vapor stream of the fluid. The pump section is fluidly connected to an outlet side of a condenser and configured to receive a liquid stream of the fluid, to pressurize the liquid stream of the fluid and to circulate the fluid in the power generation system. The motor-generator section is configured to output an electrical current.

## Description

### TECHNICAL FIELD

The embodiments of the subject matter disclosed herein generally relate to power generation systems and more particularly to turboexpanders.

### BACKGROUND

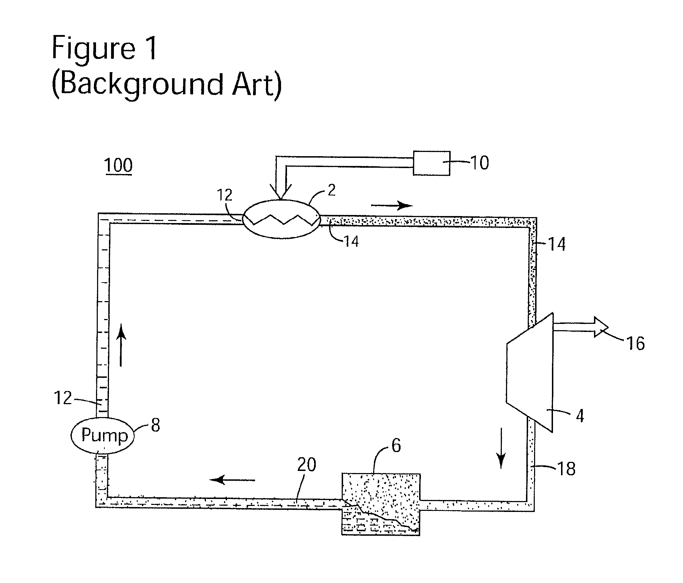

Rankine cycles use a working fluid in a closed-cycle to gather heat from a heating source or a hot reservoir by generating a hot gaseous stream that expands through a turbine to generate power. The expanded stream is condensed in a condenser by transferring heat to a cold reservoir and pumped up to a heating pressure again to complete the cycle. Power generation systems such as gas turbines or reciprocating engines (primary system) produce hot exhaust gases that are either used in a subsequent power production process (by a secondary system) or lost as waste heat to the ambient. For example, the exhaust of a large engine may be recovered in a waste heat recovery system used for production of additional power, thus improving the overall system efficiency. A common waste heat power generation system operating in a Rankine cycle is shown in Figure 1.

The power generation system 100 includes a heat exchanger 2, also known as a boiler or evaporator, an expander 4, a condenser 6 and a pump 8. In operation, beginning with the heat exchanger 2, an external heat source 10, e.g., hot flue gases, heats the heat exchanger 2. This causes the received pressurized liquid medium 12 to turn into a pressurized vapor 14, which flows to the expander 4. The expander 4 receives the pressurized vapor stream 14 and can generate power 16 as the pressurized vapor expands. The expanded lower pressure vapor stream 18 released by the expander 4 enters the condenser 6, which condenses the expanded lower pressure vapor stream 18 into a lower pressure liquid stream 20. The lower pressure liquid stream 20 then enters the pump 8, which both generates the higher pressure liquid stream 12 and keeps the closed loop system flowing. The higher pressure liquid stream 12 then flows in to the heat exchanger 2 to continue this process.

One working fluid that can be used in a Rankine cycle is an organic working fluid.

Such an organic working fluid is referred to as an organic Rankine cycle (ORC) fluid. ORC systems have been deployed as retrofits for engines as well as for small-scale and medium-scale gas turbines, to capture waste heat from the hot flue gas stream. This waste heat may be used in a secondary power generation system to generate up to an additional 20% power in addition to the power delivered by the engine producing the hot flue gases alone.

Because of safety concerns that such ORC fluid may get into direct contact with the high-temperature gas turbine exhaust gasses (approx. 500 degrees Celsius), measures need to be taken to avoid a direct contact between the ORC fluid (e.g., cyclopentane) and the gas turbine exhaust gasses. A method currently used for limiting the surface temperature of the heat exchanging surfaces in an evaporator which contains the ORC working fluids is to introduce an intermediate thermo-oil loop into the heat exchange system, i.e., to avoid the ORC fluid circulating through the exhaust stack of the gas turbine.

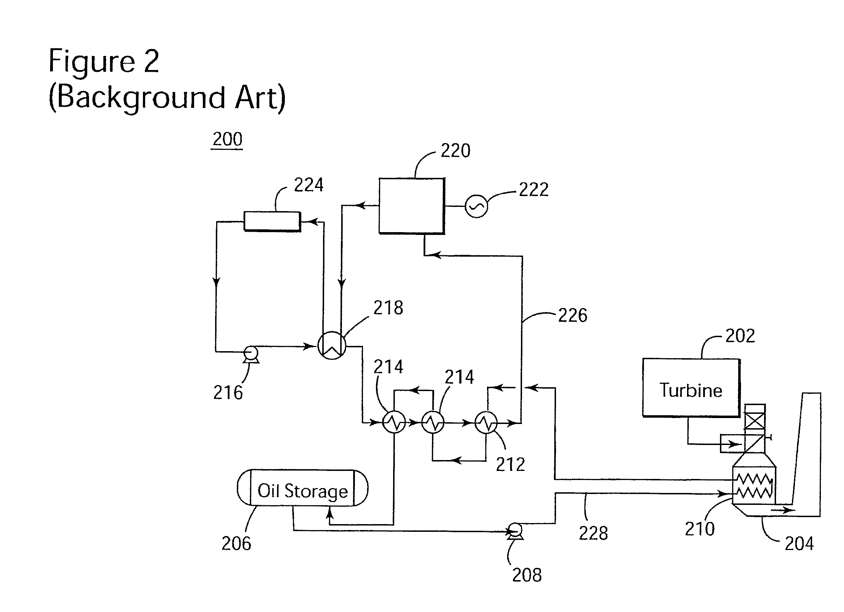

The intermediate thermo-oil loop can be used between the hot flue gas and the vaporizable ORC fluid. In this case, the intermediate thermo-oil loop is used as an intermediate heat exchanger, i.e., heat is transferred from the hot flue gas to the oil, which is in its own closed loop system, and then from the oil to the ORC fluid using a separate heat exchanger as shown in dual fluid heat exchange circuit 200 of Figure 2. Initially, oil is pumped from an oil storage unit 206 via a pump 208 through a heat exchanger 210. Heat is introduced as an exhaust of, for example, turbine 202, and is exhausted through the heat exchanger 210 and out the exhaust stack 204. The now heated oil continues, in the thermo-oil loop 228, on to a vaporizer 212 which evaporates the ORC fluid, which is located in a second self contained fluid circuit 226, and continues on through preheater elements 214 which cool the oil and preheat the ORC fluid, prior to the oil returning to the oil storage container 206.

In operation of the ORC fluid circuit 226 beginning with the pump 216, a lower pressure ORC liquid stream enters the pump 216, which both generates a higher pressure ORC liquid stream and keeps the closed loop system flowing. The higher pressure ORC liquid stream then is pumped through a recuperator 218 and preheaters 214 prior to evaporation at the heat exchanger/evaporator 212. This causes the received pressurized ORC liquid medium 12 to turn into a pressurized ORC vapor, which flows to an expander 220 which is mechanically coupled to generator 222 (or the like). The expander 220 receives the pressurized ORC vapor stream for assisting in the creation of power and creates an expanded lower pressure ORC vapor stream which continues on back through the recuperator 218 and onto the condenser 224, which condenses the expanded lower pressure ORC vapor stream into a lower pressure ORC liquid stream.

Therefore, the intermediate thermo-oil loop allows for separating the ORC fluid from direct exposure to the hot flue gas. Additionally, while the oil used in the intermediate thermo-oil loop is flammable, this oil is generally less flammable than ORC working fluids. However, this thermal oil system takes additional physical space and can represent up to one quarter of the cost of an ORC system.

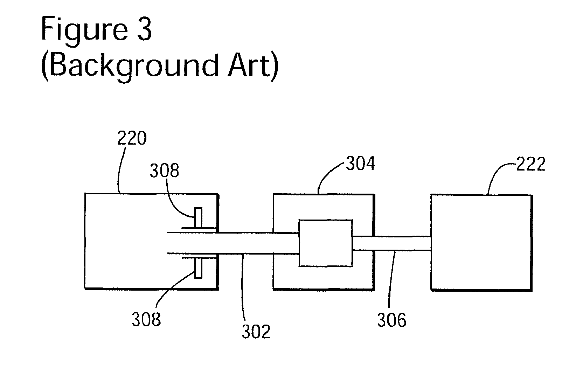

As seen in Figures 1 and 2, there are numerous components to a Rankine cycle. As shown in Figure 2, a generator 222 can be mechanically linked to the expander section 220 to create power for use. One method for connecting an expander section to a generator is shown in Figure 3. Initially, expander 220 includes a shaft 302 which rotates during fluid expansion. This shaft 302 connects to a gear box 304 which translates the mechanical energy into the desired rotation rate for the generator 222. This rotation rate and associated energy is transmitted via shaft 306 from the gear box 304 to the generator 222. In expander 220, dry gas seals 308 are provided to keep the ORC fluid (or other medium used in a Rankine cycle) from escaping into the atmosphere through the shaft 302's entrance point into the expander 220. Dry gas seals can be described as non-contacting, dry-running mechanical face seals which include a mating or rotating ring and a primary or stationary ring. In operation, grooves in the rotating ring generate a fluid-dynamic force causing the stationary ring to separate and create a gap between the two rings. These seals are referred to as "dry" since they do not require lubricating oil which, among other things, greatly reduces their maintenance requirements. As in many mechanical processes, simplifying the systems and/or reducing the number of components can reduce cost. Accordingly, systems and methods for reducing the footprint and cost of power generation systems are desirable.

### SUMMARY

According to an exemplary embodiment there is a system for power generation. The system includes: a turboexpander configured to include an expander section, a pump section and a motor-generator section which are mechanically linked via a shaft; the expander section is fluidly connected to an outlet side of a heat exchanger and configured to receive a vapor stream of a fluid, to rotate the shaft and to generate an expanded vapor stream of the fluid; the pump section is fluidly connected to an outlet side of a condenser and configured to receive a liquid stream of the fluid, to pressurize the liquid stream of the fluid and to circulate the fluid in the power generation system; the motor-generator section is configured to generate and output an electrical current.

According to another exemplary embodiment there is a turboexpander. The turboexpander includes: a turboexpander to only include an expander section, a pump section and a motor-generator section which are mechanically linked via a shaft and only two fluid inlets and only two fluid outlets, wherein the turboexpander does not include a compressor section; the expander section is fluidly connected to an outlet side of a heat exchanger and configured to receive a vapor stream of a fluid, to rotate the shaft and to generate an expanded vapor stream of the fluid, wherein the expander stage includes one or more expansion stages; the pump section is fluidly connected to an outlet side of a condenser and configured to receive a liquid stream of the fluid, to pressurize the liquid stream of the fluid and to circulate the fluid in the power generation system, wherein the pump section includes one or more pump stages; the motor-generator section configured to generate and output an electrical current; the condenser is fluidly connected to an outlet side of the expander and configured to receive and condense the expanded vapor stream of the fluid into the liquid stream of the fluid; and the heat exchanger is fluidly connected to an outlet side of the pump section and configured to receive the liquid stream of the fluid and to generate the vapor stream of the fluid.

According to another exemplary embodiment there is a system for power generation. The system includes: a turboexpander to only include an expander section, a pump section and a motor-generator section which are mechanically linked via a shaft, the turboexpander having only two fluid inlets and only two fluid outlets, and does not include a compressor section; the expander section is fluidly connected to an outlet side of a heat exchanger and configured to receive a vapor stream of a fluid, to rotate the shaft and to generate an expanded vapor stream of the fluid, wherein the expander stage includes one or more expansion stages; the pump section is fluidly connected to an outlet side of a condenser and configured to receive a liquid stream of the fluid, to pressurize the liquid stream of the fluid and to circulate the fluid in the power generation system, wherein the pump section includes one or more pump stages; the motor-generator section configured to generate and output an electrical current; the condenser is fluidly connected to an outlet side of the expander and configured to receive and condense the expanded vapor stream of the fluid into the liquid stream of the fluid; and the heat exchanger is fluidly connected to an outlet side of the pump section and configured to receive the liquid stream of the fluid and to generate the vapor stream of the fluid.

### BRIEF DESCRIPTION OF THE DRAWINGS

The accompanying drawings illustrate exemplary embodiments, wherein:
Figure 1 depicts a Rankine cycle;
Figure 2 shows a Rankine cycle and an intermediate thermo-oil system;
Figure 3 shows an expander mechanically connected to a generator;
Figure 4 illustrates a Rankine cycle with a turboexpander according to exemplary embodiments;
Figure 5 illustrates a Rankine cycle with a turboexpander with two expansion sections according to exemplary embodiments;
Figure 6 shows a Rankine cycle with a turboexpander and an intermediate thermo-oil loop according to exemplary embodiments;
Figure 7 shows a turboexpander according to exemplary embodiments; and
Figure 8 shows a turboexpander with a process gas entering two expansion sections in series according to exemplary embodiments.

### DETAILED DESCRIPTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

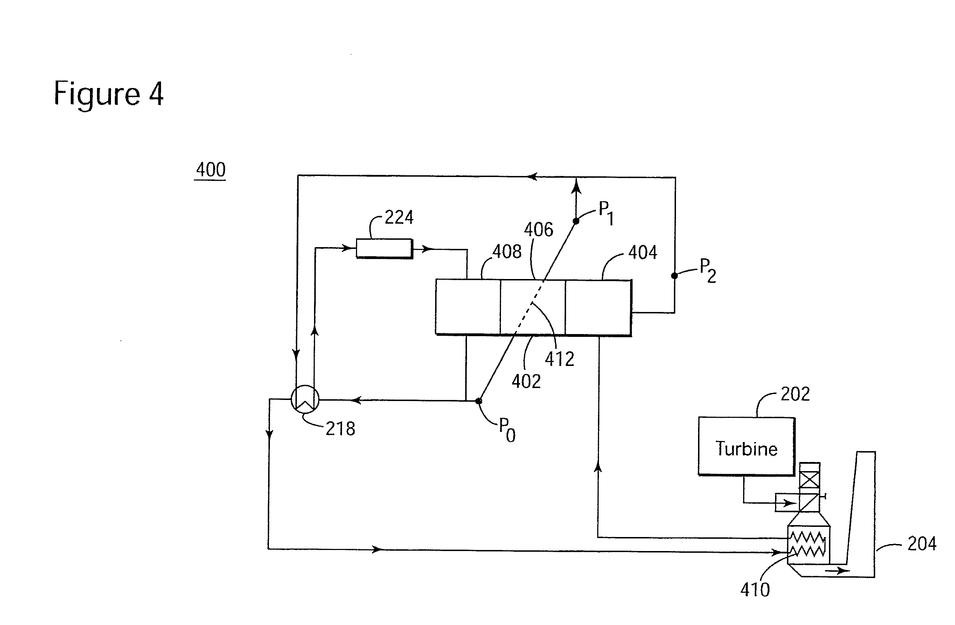

As described in the Background, and shown in Figure 1, a Rankine cycle can be used in power generation systems to capture a portion of the waste heat energy. A secondary system can be used to capture a portion of the wasted energy from the primary system that wastes the energy. According to exemplary embodiments, components used in power generation can be combined to reduce costs and footprint size and to prevent the release of polluting substances into the environment while still efficiently generate power as shown in Figure 4.

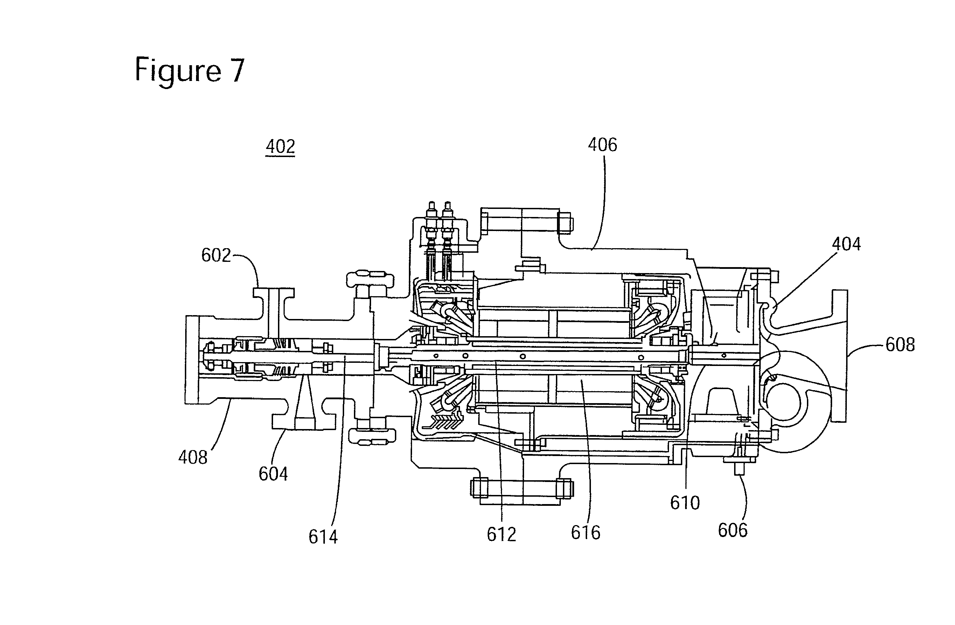

According to exemplary embodiments, a power generation system 400 illustrated in Figure 4 includes a heat exchanger 410, a turboexpander 402 (having an expander section 404, a motor-generation section 406, and a pump section 408), a condenser 224 and a recuperator 218. Describing this closed loop system, beginning with the heat exchanger 410, exhaust gases from the turbine 202 flow past and heat the heat exchanger 410 prior to exiting the exhaust stack 204. This causes a pressurized liquid medium to turn into a pressurized vapor which flows to the expander section 404 of the turboexpander 402. The expander section 404 receives the pressurized vapor stream which rotates an impeller attached to a shaft (shown in Figure 7) as the pressurized vapor expands which allows the motor-generator section 406 of the turboexpander 402 to generate electrical current. In one application, the shaft of the expander section 404 is also the shaft of the motor-generator 406. Additionally, the shaft is shared with a pump section 408 of the turboexpander 402 for providing the energy used by the pump section 408 to pressurize the liquid medium. In another exemplary embodiment, each section has its own shaft but all these shafts are connected to each other and rotate together.

The expanded lower pressure vapor stream released by the expander section 404 flows through the recuperator 218 for heat exchange and then enters a condenser 224, which condenses the expanded lower pressure vapor stream into a lower pressure liquid stream. The lower pressure liquid stream then enters the pump section 408 of the turboexpander 402, which both generates the higher pressure liquid stream and keeps the closed loop system flowing. The higher pressure liquid stream then is pumped to the heat exchanger 410 to continue this process. A portion of the higher pressure liquid stream may be split and used to cool the motor-generator section 406 as shown by the line 412. The higher pressure liquid stream passes recuperator 218 and cools the stream from the expander section 404. Also shown in Figure 4 are the relative pressures at various stages of the cycle, with Pₒ > P₁>P₂.

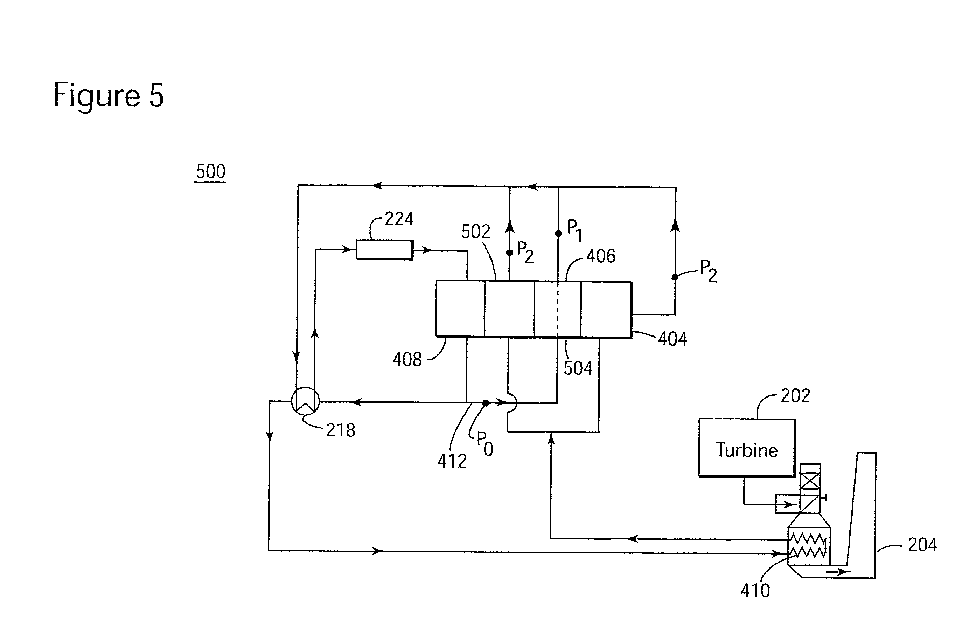

According to another exemplary embodiment, the turboexpander 504 can include two expansion stages 404 and 502 as shown in Figure 5. The exemplary power generation system 500 operates in a similar manner to the power generation system 400 shown in Figure 4. The turboexpander 504, going from right to left in Figure 5, has a first expansion section 404, a motor-generator section 406, a second expansion section 502 and a pump section 408. The process gas is split prior to entering the turboexpander 504 such that both expander sections receive the process gas for expansion. A portion of the higher pressure liquid stream is split and used to cool the motor-generator section 406 as shown by the line 412. Also shown in Figure 5 are the relative pressures at various stages of the cycle, with Pₒ > P₁ > P₂.

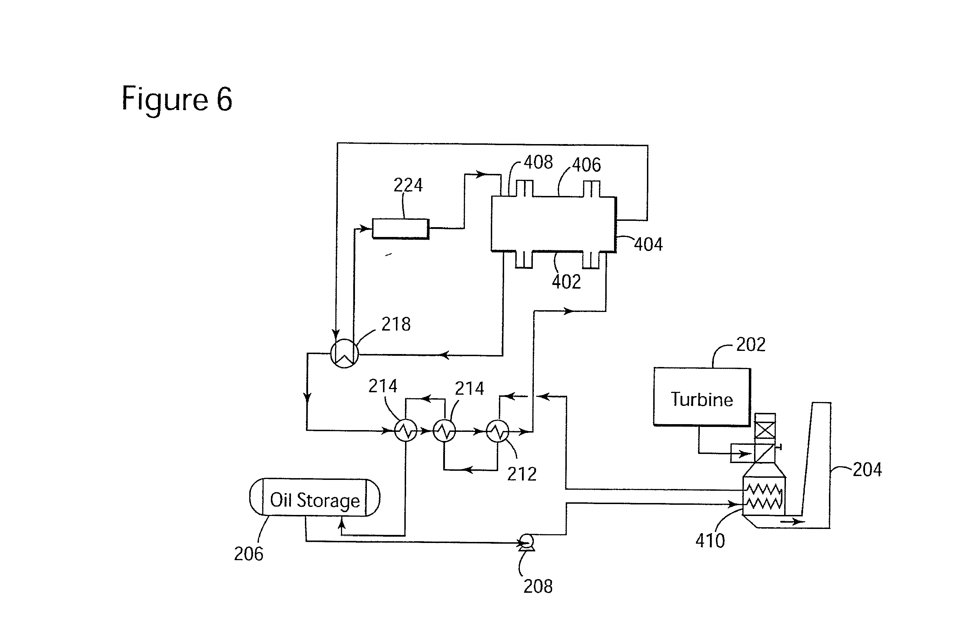

According to exemplary embodiments, one working fluid that can be used in a Rankine cycle is an organic working fluid such as an organic Rankine cycle (ORC) fluid. Examples of ORC fluids include, but are not limited to, pentane, propane, cyclohexane, cyclopentane, butane, a fluorohydrocarbon such as R-245fa, a ketone such as acetone or an aromatic such as toluene or thiophene. However, as mentioned in the Background section, when directly exposed to high temperatures there is a risk of degradation of the ORC fluid. Therefore, according to exemplary embodiments, an intermediate thermo-oil loop can be used in power generation systems which use the exemplary turboexpander 402 as shown in Figure 6. This exemplary power generation system works as described above with respect to Figures 4 and 5 in conjunction with the intermediate thermo-oil loop as described in the Background section and shown in Figure 2, and for the sake of simplicity will not be described in more detail herein.

According to exemplary embodiments illustrated in Figure 6, turboexpander 402 includes an expander section 404, a motor-generator section 406 and a pump section 408. The turboexpander 402 is an integrated unit which is sealed such that no rotating parts cross the sealed casing of the turboexpander 402. This allows for the elimination of dry gas seals in the turboexpander 402 between the expander section and the generator. As shown in Figure 7, the three sections of the turboexpander 402 are mechanically linked via a shaft 616 which may be three separate but mechanically linked shafts. For example, the expander section 404 can have a shaft 610 which is mechanically attached to a shaft 612 in the motor-generator section 406, with the shaft 612 being mechanically linked to a shaft 614 in the pump section 408. In one application, shafts 610, 612, and 614 are integrally manufactured as a single shaft. Both the pump section 408 and the expander section 404 can have multiple stages, e.g., two or more stages. Since turboexpander 402 is an integrated unit, there is no need for a gearbox (and the gearbox's associated lubrication system) to exist between the expander section 402 and the motor generator section 404. These exemplary embodiments also can be obtained from the turboexpander 504 shown in Figure 5 by combining exemplary embodiments, i.e., using a single shaft or four mechanically linked shafts in the turboexpander 504.

According to exemplary embodiments, the turboexpander 402 can have only two fluid inlets 602, 606 and only two fluid outlets 604, 608. By having these four fluid inlets/outlets in the turboexpander 402 the loss of process gas to the environment is greatly reduced from traditional systems, e.g., turboexpander 402 does not include the traditional environmental seals which are prone to hazardous gas leakages. Additionally, by having the exemplary turboexpander 402 as described herein, shipping weight and plant footprint size are both reduced when compared to a traditional power generation system.

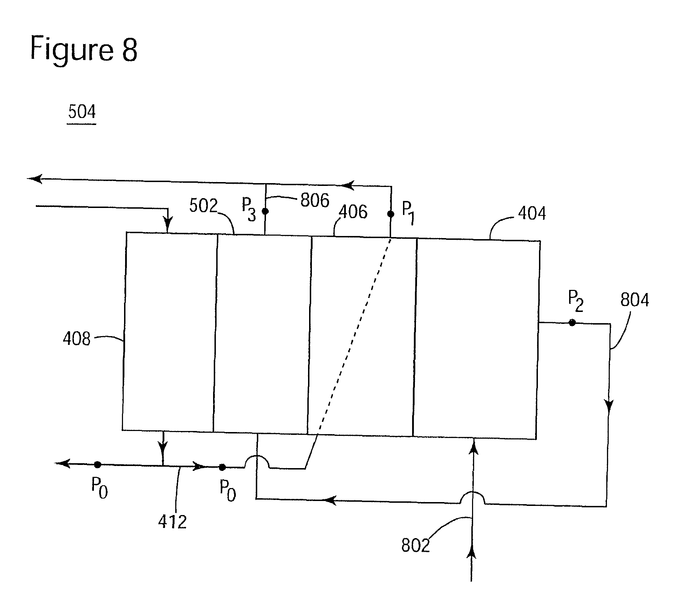

According to alternative exemplary embodiment, turboexpander 504 can have the expansion stages receive the process gas in series as shown in Figure 8. Figure 8 shows the first expansion section 404 receiving the process gas from piping 802. After expansion, the process gas leaves the first expansion section 404 and goes to the second expansion section 502 as shown by piping 804. After this expansion, the process gas exits the second expansion stage 502 as shown by piping 806. Pressures in this system are characterized by relationship Pₒ > P₁ > P₂ > P₃. According to exemplary embodiments, the motor-generator section 406 can be a high speed generator, e.g., a 3 MW and/or a 6 MW. This motor-generator 406 can operate at a same rotation speed generated by the expander section 404 which allows for the non-inclusion of a gear box. An output of the motor-generator 406 can be a direct current or an alternating current. According to an exemplary embodiment, magnetic bearings can be used in the motor-generator 406. According to an alternative exemplary embodiment, oil lubrication can be used instead of magnetic bearings in the motor-generator 406.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope and spirit of the present invention as defined by the following claims. No element, act, or instruction used in the description of the present application should be construed as critical or essential to the invention unless explicitly described as such. Also, as used herein, the article "a" is intended to include one or more items.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other example are intended to be within the scope of the claims if they have structural elements that do not differ from the literal language of the claims, or if they include equivalent structural elements within the literal languages of the claims.

## Claims

1. A system for power generation, the system comprising:
a turboexpander configured to include an expander section, a pump section and a motor-generator section which are mechanically linked via a shaft;
the expander section is fluidly connected to an outlet side of a heat exchanger and configured to receive a vapor stream of a fluid, to rotate the shaft and to generate an expanded vapor stream of the fluid;
the pump section is fluidly connected to an outlet side of a condenser and configured to receive a liquid stream of the fluid, to pressurize the liquid stream of the fluid and to circulate the fluid in the power generation system; and
the motor-generator section is configured to generate and output an electrical current.

2. The system of claim 1, further comprising:
the condenser which is fluidly connected to an outlet side of the expander section and configured to receive and condense the expanded vapor stream of the fluid into the liquid stream of the fluid; and
the heat exchanger which is fluidly connected to an outlet side of the pump section and configured to receive the liquid stream of the fluid and to generate the vapor stream of the fluid.

3. The system of claim 2, wherein the turboexpander includes only a first expander section, a motor-generator section, a second expander section and a pump section connected to each other in this order.

4. The system of any preceding claim, wherein the pump section includes one or more stages with only one fluid inlet and one fluid outlet, the expander section includes one stage with only one fluid inlet and one fluid outlet and the motor-generator section has only one fluid inlet and one fluid outlet.

5. The system of any preceding claim, wherein the turboexpander is integrally sealed such that all rotating parts of the expander section, motor-generator section and pump section remain entirely within a casing of the turboexpander.

6. The system of any preceding claim, wherein an expander shaft in the expander section rotates at a same speed as shafts associated with the motor-generator section and the pump section.

7. The system of any preceding claim, wherein the turboexpander does not include a compressor section.

8. The system of any preceding claim, wherein the turboexpander includes only an expander section, a motor-generator section and a pump section.

9. A turboexpander for use in power generation, the turboexpander comprising:
an integrated casing which contains a first expander section with only one fluid inlet and one fluid outlet, a pump section with only one fluid inlet and one fluid outlet and a motor-generator section with only one fluid inlet and one fluid outlet;
a shaft which mechanically links the expander section, the pump section and the motor-generator section;
the first expander section configured to rotate the shaft, receive a vapor stream of a fluid and to generate an expanded vapor stream of the fluid;
a pump section configured to receive a liquid stream of the fluid and to pressurize the liquid stream of the fluid; and
a motor-generator section configured to generate and output an electrical current when activated by the expander section.

10. A system for power generation, the system comprising:
a turboexpander to only include an expander section with only one fluid inlet and one fluid outlet, a pump section with only one fluid inlet and one fluid outlet and a motor-generator section with only one fluid inlet and one fluid outlet which are mechanically linked via a shaft, the turboexpander does not include a compressor section;
the expander section is fluidly connected to an outlet side of a heat exchanger and configured to receive a vapor stream of a fluid, to rotate the shaft and to generate an expanded vapor stream of the fluid, wherein the expander stage includes one or more expansion stages;
the pump section is fluidly connected to an outlet side of a condenser and configured to receive a liquid stream of the fluid, to pressurize the liquid stream of the fluid and to circulate the fluid in the power generation system, wherein the pump section includes one or more pump stages;
the motor-generator section configured to generate and output an electrical current;
the condenser is fluidly connected to an outlet side of the expander and configured to receive and condense the expanded vapor stream of the fluid into the liquid stream of the fluid; and
the heat exchanger is fluidly connected to an outlet side of the pump section and configured to receive the liquid stream of the fluid and to generate the vapor stream of the fluid.
